# EUROPEAN PATENT APPLICATION

(11) **EP 2 302 904 A1**
(43) Date of publication of application: **30.03.2011**
(21) Application number: 08874850.4
(22) Date of filing: 13.11.2008
(51) Int. Cl.: H04N 5/232, G03B 13/36, G06F 3/00

(54) **A PHOTO TAKING APPARATUS AND A METHOD THEREOF**

(30) Priority: 03.07.2008 CN 200810040252
(71) Applicant: BenQ Corporation, Nei Hu Taipei Taiwan (TW)
(72) Inventor: CHEN, Wen-Kang, Taipei City 112 Taiwan (CN); CHAO, Chia-Chen, Taipei City 114 Taiwan (CN); HO, Shuo-Yen, Taiwan (CN); CHOU, Yi-Ting, Taipei County 220 Taiwan (CN)
(74) Representative: Brandenburger, Karin
(86) International application number: PCT/CN2008/073038
(87) International publication number: WO 2010/000118

(57) **Abstract**

A method for controlling a photographing apparatus is provided. The photographing apparatus includes a touch screen. In the method, it is first detected whether a user keeps touching a focus point on the touch screen for a specific duration. If the detected result is YES, the photographing apparatus is controlled to perform an automatic focusing procedure corresponding to the focus point and then an automatic photographing procedure.

## Description

### BACKGROUND OF THE INVENTION

### 1. Field of the invention

The present invention is related to photographing apparatuses. In particular, the present invention relates to methods for controlling a photographing apparatus to perform photographing procedures automatically.

### 2. Description of the prior art

In recent years, with the flourishing development of electronic and optical techniques, digital photographing apparatuses have become very popular and widely used. Not only digital cameras but also lots of portable electronic products, for example, mobile phones or PDAs, are capable of taking photographs. Most digital photographing apparatuses have display panels. When the user is taking photo, the display panel can show preview images in real time. When the user wants to adjust the settings of the photographing apparatus, the display panel can show function lists.

There is a growing trend towards light and handy consumer electronics. Display panels with the function of touch control are thin and provide friendly user interfaces. Further, replacing traditional keyboards or buttons by touch screens can solve many problems in human-machine interfaces. Since techniques about touch screens have become mature and the cost of touch screens has become much lower than before, more and more digital photographing apparatuses are equipped with touch screens and provide functions related to users' touch action.

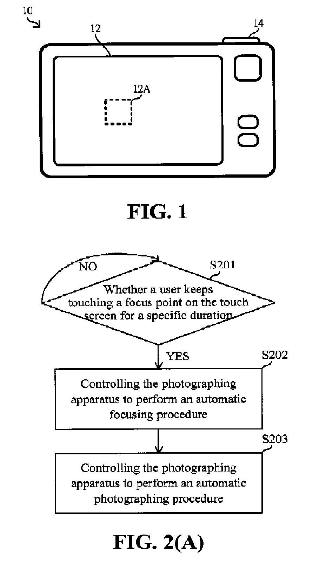

Please refer to FIG. 1, which shows the outward appearance of a photographing apparatus. In this example, besides optical devices such as lenses (not shown), the photographing apparatus 10 includes a touch screen 12 and a button 14. The technique of letting the user assign a focus point via the touch screen 12 has existed. More specifically, in the photographing mode, the user can move the focus frame 12A shown on the touch screen 12 by touching the touch screen 12. Once the location of the focus frame 12A is confirmed and the button 14 is pressed thereafter, the control circuit in the photographing apparatus 10 will perform focusing and photographing procedures according to the focus point determined by the user.

The aforementioned control process has brought much convenience to the user. However, whenever the user presses the button 14, his/her action inevitably induces unintentional shakes of the photographing apparatus 10. The focus point might accordingly be shifted and even the taken photos might be blurred.

### SUMMARY OF THE INVENTION

To solve the aforementioned problems, the invention provides methods for controlling a photographing apparatus to automatically perform a photographing procedure. The methods according to the invention can be applied in various photographing apparatuses including touch screens, for instance, digital cameras, mobile phones having the photographing function, or PDAs capable of taking photos.

In a control method in one embodiment according to the invention, it is first detected whether a user keeps touching a focus point on the much screen for a specific duration. If the detected result is YES, the photographing apparatus is controlled to perform an automatic focusing procedure corresponding to the focus point and then an automatic photographing procedure.

Another embodiment according to the invention is also a method for controlling a photographing apparatus. In this method, it is first detected whether a user keeps touching a focus point on the touch screen for a specific duration. If the detected result is YES, the photographing apparatus is controlled to perform an automatic focusing procedure corresponding to the focus point. Subsequently, if the user touches a first area on the touch screen, the photographing apparatus is controlled to perform an automatic photographing procedure. On the contrary, if the does not touch the first area after the automatic focusing procedure, the photographing apparatus will not be controlled to perform the automatic photographing procedure.

In the embodiments according to the invention, after a user selects a focus point, he or she does not have to press any button and the photographing apparatus will optionally perform an automatic photographing procedure. Hence, the photographing apparatuses and control methods according to the invention can prevent problems induced by unintentionally shakes. More humanized operation processes and better photo qualities can also be provided.

The advantage and spirit of the invention may be understood by the following recitations together with the appended drawings.

### BRIEF DESCRIPTION OF THE APPENDED DRAWINGS

FIG. 1 shows a photographing apparatus.
FIG. 2(A) and FIG. 2(B) show the flowchart of the control method in one embodiment according to the invention.
FIG. 3(A) and FIG. 3(B) respectively illustrate the touch screen with and without showing touch keys.
FIG. 4(A) shows an exemplary touch screen divided into three areas; FIG. 4(B) shows an exemplary ratio of the first area and the second area.
FIG. 5(A) and FIG. 5(B) illustrate the flowcharts of the control method in another embodiment according to the invention.
FIG. 6(A) and FIG. 6(B) illustrate exemplary block diagrams of the photographing apparatus according to the invention.

### DETAILED DESCRIPTION OF THE INVENTION

According to the invention, the photographing apparatus 10 shown in FIG. 1 can have two different photographing modes. In the first mode, the photographing procedure is triggered if the button 14 is pressed. In the second mode, a user can trigger the photographing procedure directly via the touch screen 12. The control methods for aforementioned the second mode according to the invention are explained in the following embodiments,

Please refer to FIG. 2(A), which shows the flowchart of the control method in one embodiment according to the invention. In this embodiment, step S201 is first performed to detect whether a user keeps touching a focus point on the touch screen 12 for a specific duration. For example, if the specific duration is set as three seconds and a focus frame 12A is touched, step S201 is detecting whether the user keeps touching the focus frame 12A for three seconds.

In actual applications, the focus frame 12A is movable. The user can first move the focus frame 12A to an expected focus point (e.g. a human face in the preview image) and then keeps touching the focus frame 12A. In this embodiment, keeping touching the focus frame 12A for the specific duration indicates that the user requests the photographing apparatus 10 to perform a focusing procedure corresponding to the focus frame 12A and then a photographing procedure.

Therefore, if the detected result of step S201 is YES, step S202 is performed. In this step, the photographing apparatus 10 is controlled to perform an automatic focusing procedure corresponding to the location currently indicated by the focus frame 12A. Practically, this automatic focusing procedure can be performed by adjusting the focal length of optical lenses and/or the size of images captured by an digital image processing device (not shown) in the photographing apparatus 10. Since both optical focusing and digital focusing are techniques well known in this art, the detail of the focusing procedure will not be further described.

After step S202, step S203 is executed for controlling the photographing apparatus 1 to perform an automatic photographing procedure. The scenery in front of the photographing apparatus 10 at this time is photographed. On the contrary, if the detected result of step S201 is NO, step S201 will be re-performed.

As shown in FIG. 2(A), in this embodiment, as long as the user keeps touching the focus frame 12A after selecting a focus point, the photographing apparatus 10 will perform an automatic photographing procedure. Compared with pressing the button 14, touching the focus frame 12A induces less shakes for the photographing apparatus 10. After selecting an expected focus point, the user even does not have to add extra power to press the focus frame 12A. Accordingly, the aforementioned control method can prevent the problems induced by pressing the button 14.

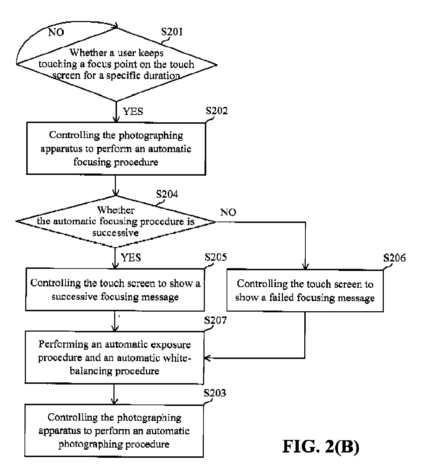

As shown in FIG. 2(B), further steps S204-S207 can be included between steps S202 and S203. The main purpose of step S204 is judging whether the automatic focusing procedure in step S202 is successive. If the judging result of step S204 is YES, step S205 will be performed so as to control the photographing apparatus 10 to convey a successive focusing message. On the contrary, if the judging result of step S204 is NO, step S206 will be performed so as to control the photographing apparatus 10 to convey a failed focusing message. With the messages, the user can know whether the automatic focusing procedure is successive.

For example, controlling the color of the focus frame 12A to be turned into green can represent the focusing procedure is successive; controlling the color of the focus frame 12A to be turned into red can represent the focusing procedure is failed. The messages can also be shown on the touch screen 12 as texts or be conveyed as voices via the speaker (not shown) disposed in the photographing apparatus 10.

In this embodiment, no matter the automatic focusing procedure is successive or not, steps S207 and S203 will be subsequently performed. In step S207, an automatic exposure procedure and an automatic white-balancing procedure are performed, so as to further adjust the brightness and color of captured images.

In actual applications, when the photographing apparatus 10 is performing the automatic focusing procedure or the automatic photographing procedure, the function of detecting user actions by the touch screen 12 (e.g. step S201) can be paused. After the detecting function is paused, there will not continuously be new detected results that might interfere the operations in the photographing apparatus 10.

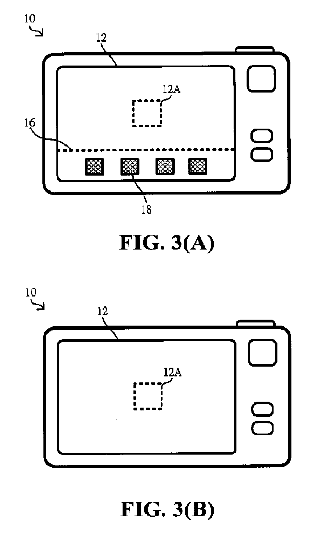

Please refer to FIG. 3(A) and FIG. 3(B). As shown in FIG. 3(A), according to the invention, the touch screen 12 can be divided into two (up-down or right-left) regions. In this example, the area above the dividing line 16 (hereinafter referred as the first area) is used for displaying preview images. The area below the dividing line 16 (hereinafter referred as the second area) is used for displaying one or more touch keys 18 (e.g. keys for zooming in, zooming out, switching modes, or showing an index).

Practically, starting to touch the first area that includes the focus frame 12A generally indicates that the user desires to adjust the position of the focus frame 12A. To provide larger or clearer preview images, when the user is touching the first area, the touch keys 18 in the second area can be hidden as shown in FIG. 3(B). Correspondingly, the functions of the touch keys 18 can be paused. If the user stops touching the touch screen 12, the functions of the touch keys 18 can be recovered and the touch screen 12 can be recovered as shown in FIG. 3(A).

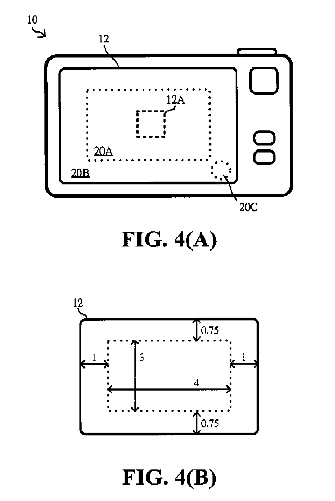

Please refer to FIG. 4(A). In another embodiment according to the invention, the touch screen 12 is divided into three areas: a first area 20A approximately including the center region of the touch screen 12, a second area 20B that surrounds the first area 20A, and a third area 20C at the lower right corner of the touch screen 12. As shown in FIG. 4(A), the focus frame 12A is inside the first area 20A. FIG. 4(B) shows an exemplary ratio of the first area 20A and the second area 20B.

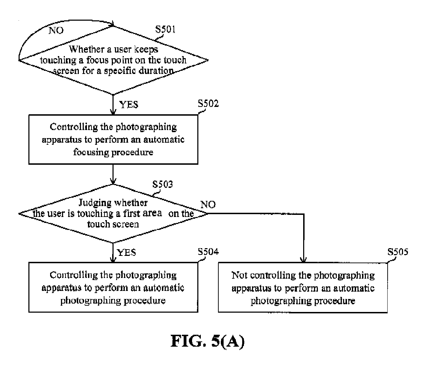

One embodiment according to the invention is a control method for the touch screen 12 shown in FIG. 4(A). FIG. 5(A) illustrates the flowchart of this control method. In step S501, it is detected that whether a user keeps touching a focus point on the touch screen 12 for a specific duration. If the detected result of step S501 is YES, step S502 is executed to control the photographing apparatus 10 to perform an automatic focusing procedure corresponding to the focus point. If the detected result of step S501 is NO, step S501 is re-performed.

After step S502, step S503 will be performed to judge whether the user is touching the first area 20A. If the judged result of step S503 is YES, step S504 will then be performed to control the photographing apparatus 10 to perform an automatic photographing procedure. On the contrary, if the judged result of step S503 is NO, as shown in step S505, the photographing apparatus 10 will not be controlled to perform the photographing procedure.

The main difference between the methods shown, in FIG. 5(A) and FIG. 2(A) is that in the method shown in FIG. 5(A), the photographing apparatus 10 will not necessarily perform the automatic photographing procedure after the automatic focusing procedure is completed. More specifically, as long as the user does not touch the first area 20A anymore after selecting a focus point, the succeeding photographing procedure will be abandoned.

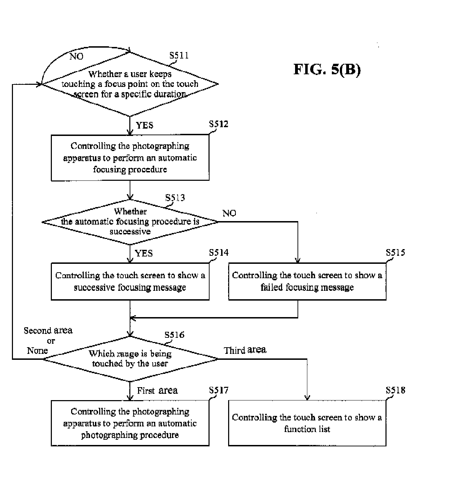

Please refer to FIG. 5(B), which illustrates a more detailed control method according to the invention. The steps S511-S512 in FIG. 5(B) are the same as the steps S501~S502 in FIG. 5(A). The purpose of step S513 is judging whether the automatic focusing procedure in step S512 is successive. If the judging result of step S513 is YES, step S514 will be performed so as to control the photographing apparatus 10 to convey a successive focusing message. On the contrary, if the judging result of step S513 is NO, step S515 will be performed so as to control the photographing apparatus 10 to convey a failed focusing message.

According to the messages conveyed by the photographing apparatus 10, the user can decide whether the succeeding photographing procedure will be performed or not. For instance, if finding out that the focusing procedure is failed and wanting to re-select another focus point, the user can remove his/her finger and stop touching the first area 20A.

In this embodiment, after step S514 or step S515, step S516 can be performed to judge which area on the touch screen 12 is being touched by the user. If the user keeps touches the first area 20A after the automatic focusing procedure, step S517 is executed to control the photographing apparatus 10 to further perform an automatic photographing procedure. If the judging result of step S516 indicates that the user has moved his/her finger to the second area 20B or does not touch any part of the touch screen 12, step S511 is re-performed.

In the judging result of step S516 indicates that the user has moved his/her finger to the third area 20C, step S518 will be executed to control the touch screen to show a function list, for example, including the touch keys 18 shown in FIG. 3(A).

Practically, the control methods shown in FIG. 5(A) and FIG. 5(B) can also include steps of automatic exposure procedure and automatic white-balancing procedure, so as to further adjust the brightness and color of captured images. Besides, when the photographing apparatus 10 controlled by the methods shown in FIG. 5(A) or FIG. 5(B) is performing the automatic focusing procedure or the automatic photographing procedure, the function of detecting user actions by the touch screen 12 can be paused. After the detecting function is paused, there will not continuously be new detected results that might interfere the operations in the photographing apparatus 10.

Moreover, the control methods shown in FIG. 5(A) and FIG. 5(B) can also include the mechanism of showing/hiding the function list. For example, when the user is not touching the touch screen 12, the touch screen 12 can display plural touch keys as shown in FIG. 3(A). Once the user starts to touch the area including the focus frame 12A, most of the touch keys can be hidden as shown in FIG. 4(A). Only the touch key for starting the function list (i.e. the third area 20C) is kept on the touch screen 12.

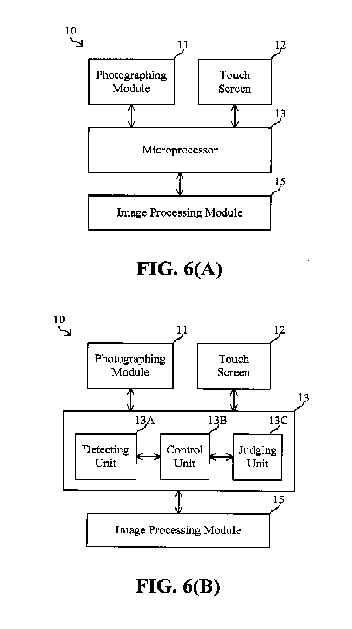

Please refer to FIG. 6(A), which illustrates an exemplary block diagram of the photographing apparatus 10. As shown in FIG. 6(A), the photographing apparatus 10 includes a photographing module 11, a touch screen 12, a microprocessor 13, and an image processing module 15. In actual applications, the photographing module 11 can include devices such as optical lenses and optical sensing plate. The touch screen 12 can include a touch panel of resistance-type, capacitance-type, optical-type, or ultrasonic-type. The image processing module 15 is used for performing procedures such as automatic exposure and automatic white-balancing.

The microprocessor 13 is used for overall planning and controlling the operations of the photographing module 11, touch screen 12, and image processing module 15. In other words, the microprocessor 13 can be responsible for receiving the sensed results generated by the touch screen 12. The microprocessor 13 can also control the photographing module 11 and the image processing module 15 based on the methods shown in FIG. 2(A) or FIG. 5(A).

FIG. 6(B) illustrates another exemplary block diagram of the photographing apparatus 10. The microprocessor 13 shown in FIG. 6(B) can also control the photographing module 11 and the image processing module 15 based on the methods shown in FIG. 2(A) or FIG. 5(A). In this example, the microprocessor 13 includes a detecting unit 13A, a control unit 13B, and a judging unit 13C. The detecting unit 13A is used for detecting whether a user keeps touching a focus point on the touch screen 12 for a specific duration. If the detected result of the detecting unit 13A is YES, the control unit 13B then controls the photographing module 11 to perform an automatic focusing procedure corresponding to the focus point. The judging unit 13C is used for judging whether the user is touching the first area 20A after the automatic focusing procedure is completed. If the judging result of the judging unit 13C is YES, the control unit 13B will control the photographing module 11 to perform an automatic photographing procedure.

As described above, in the embodiments according to the invention, after selecting a focus point, a user does not have to press any button and the photographing apparatus will optionally perform an automatic photographing procedure. Hence, the photographing apparatuses and control methods according to the invention can prevent problems induced by unintentionally shakes. Besides, more humanized operation processes and better photo qualities can also be provided. The aforementioned control methods can be applied not only in digital cameras but also photographing apparatuses including touch screens such as mobile phones having the photographing function, or PDAs capable of taking photos.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A method for controlling a photographing apparatus, the photographing apparatus comprising a touch screen, the method comprising the steps of:
(a) detecting whether a user keeps touching a focus point on the touch screen for a specific duration;
(b) if the detected result of step (a) is YES, controlling the photographing apparatus to perform an automatic focusing procedure corresponding to the focus point; and
(c) controlling the photographing apparatus to perform an automatic photographing procedure.

2. The method of claim 1, further comprising the step of:
if the detected result of step (a) is NO, re-performing step (a).

3. The method of claim 1, wherein when the photographing apparatus is performing the automatic focusing procedure or the automatic photographing procedure, step (a) is paused.

4. The method of claim 1, further comprising the step of:
when the user is touching a first area on the touch screen, pausing the function of at least one touch key on the touch screen;
wherein the focus point is in the first area.

5. The method of claim 4, further comprising the step of:
if the user has stopped touching the touch screen, recovering the function of the at least one touch key.

6. The method of claim 1, further comprising the step of:
if the automatic focusing procedure has been successive, controlling the photographing apparatus to convey a successive focusing message; if the automatic focusing procedure has been failed, controlling the photographing apparatus to convey a failed focusing message.

7. The method of claim 1, further comprising the step of:
between steps (b) and (c), performing an automatic exposure procedure and an automatic white-balancing procedure.

8. A method for controlling a photographing apparatus, the photographing apparatus comprising a touch screen, the method comprising the steps of:
(a) detecting whether a user keeps touching a focus point on the touch screen for a specific duration;
(b) if the detected result of step (a) is YES, controlling the photographing apparatus to perform an automatic focusing procedure corresponding to the focus point;
(c) judging whether the user is touching a first area on the touch screen; and
(d) if the detected result of step (c) is YES, controlling the photographing apparatus to perform an automatic photographing procedure.

9. The method of claim 8, further comprising the step of:
if the detected result of step (a) is NO, re-performing step (a).

10. The method of claim 8, wherein when the photographing apparatus is performing the automatic focusing procedure or the automatic photographing procedure, step (a) is paused.

11. The method of claim 8, further comprising the steps of:
(e1) if the detected result of step (c) is NO, detecting whether the user is touching a second area on the touch screen; and
(e2) if the detected result of step (e1) is YES, re-performing step (a).

12. The method of claim 8, further comprising the steps of:
(e3) if the detected result of step (c) is NO, detecting whether the user is touching a third area on the touch screen; and
(e4) if the detected result of step (e3) is YES, controlling the touch screen to show a function list.

13. The method of claim 8, further comprising the step of:
when the user is touching the first area on the touch screen, pausing the function of at least one touch key on the touch screen;
wherein the focus point is in the first area.

14. The method of claim 13, further comprising the step of:
if the user has stopped touching the touch screen, recovering the function of the at least one touch key.

15. The method of claim 8, further comprising the step of:
if the automatic focusing procedure has been successive, controlling the photographing apparatus to convey a successive focusing message; if the automatic focusing procedure has been failed, controlling the photographing apparatus to convey a failed focusing message.

16. The method of claim 1, further comprising the step of:
between steps (b) and (d), performing an automatic exposure procedure and an automatic white-balancing procedure.

17. A photographing apparatus, comprising:
a photographing module;
a touch screen; and
a microprocessor electrically connected to the photographing module and the touch screen, the microprocessor being used for detecting whether a user keeps touching a focus point on the touch screen for a specific duration, if the detected result is YES, the microprocessor controlling the photographing module to perform an automatic focusing procedure corresponding to the focus point and then an automatic photographing procedure.

18. The photographing apparatus of claim 17, wherein when the photographing module is performing the automatic focusing procedure or the automatic photographing procedure, the microprocessor stops detecting whether the user is touching the touch screen.

19. The photographing apparatus of claim 17, wherein the focus point is in a first area on the touch screen, when the user is touching the first area, the microprocessor pauses the function of at least one touch key on the touch screen.

20. The photographing apparatus of claim 19, wherein if the user has stopped touching the touch screen, the microprocessor recovers the function of the at least one touch key.

21. The photographing apparatus of claim 17, wherein if the automatic focusing procedure has been successive, the microprocessor controls the photographing apparatus to convey a successive focusing message; if the automatic focusing procedure has been failed, the microprocessor controls the photographing apparatus to convey a failed focusing message.

22. The photographing apparatus of claim 17, further comprising:
an image processing module electrically connected to the microprocessor, before the photographing module starts to perform the automatic photographing procedure, the microprocessor controlling the image processing module to perform an automatic exposure procedure and an automatic white-balancing procedure.

23. A photographing apparatus, comprising:
a photographing module;
a touch screen; and
a microprocessor electrically connected to the photographing module and the touch screen, comprising:
a detecting unit for detecting whether a user keeps touching a focus point on the touch screen for a specific duration;
a control unit, if the detected result of the detecting unit is YES, the control unit controlling the photographing module to perform an automatic focusing procedure corresponding to the focus point; and
a judging unit for judging whether the user is touching a first area on the touch screen after the automatic focusing procedure is completed, if the judging result of the judging unit is YES, the control unit controlling the photographing module to perform an automatic photographing procedure.

24. The photographing apparatus of claim 23, wherein when the photographing module is performing the automatic focusing procedure or the automatic photographing procedure, the detecting unit stops detecting whether the user is touching the touch screen.

25. The photographing apparatus of claim 23, wherein the judging unit is also used for judging whether the user is touching a second area on the touch screen after the automatic focusing procedure is completed, if the user is touching the second area, the detecting unit re-starts to detect whether the user keeps touching the focus point or another focus point for the specific duration.

26. The photographing apparatus of claim 25, wherein the first area approximately comprises a center region of the touch screen and the second area approximately surrounds the first area.

27. The photographing apparatus of claim 23, wherein the judging unit is also used for judging whether the user is touching a third area on the touch screen after the automatic focusing procedure is completed, if the user is touching the third area, the control unit controls the touch screen to show a function list.

28. The photographing apparatus of claim 23, wherein when the user is touching the first area, the control unit pauses the function of at least one touch key on the touch screen.

29. The photographing apparatus of claim 28, wherein if the user stops touching the touch screen, the control unit recovers the function of the at least one touch key.

30. The photographing apparatus of claim 23, wherein if the automatic focusing procedure has been successive, the control unit controls the photographing apparatus to convey a successive focusing message; if the automatic focusing procedure has been failed, the control unit controls the photographing apparatus to convey a failed focusing message.

31. The photographing apparatus of claim 23, further comprising:
an image processing module electrically connected to the microprocessor, before the photographing module starts to perform the automatic photographing procedure, the microprocessor controlling the image processing module to perform an automatic exposure procedure and an automatic white-balancing procedure.
